# EUROPÄISCHE PATENTSCHRIFT

(11) **EP 2 326 536 B1**
(45) Veröffentlichungstag und Bekanntmachung des Hinweises auf die Patenterteilung: **27.11.2013**
(21) Anmeldenummer: 09782285.2
(22) Anmeldetag: 27.08.2009
(51) Int. Cl.: B60S 1/08

(54) **SENSORANORDNUNG FÜR EIN KRAFTFAHRZEUG**
SENSORASSEMBLY FOR A VEHICLE
AGENCEMENT DE CAPTEUR POUR UN VEHICULE

(30) Priorität: 28.08.2008 DE 102008044840
(43) Veröffentlichungstag der Anmeldung: 01.06.2011
(73) Patentinhaber: Leopold Kostal GmbH & Co. KG, 58513 Lüdenscheid (DE)
(72) Erfinder: RÖHR, Michael, 44265 Dortmund (DE); HAGEN, Frank, 58511 Lüdenscheid (DE)
(74) Vertreter: Kerkmann, Detlef
(86) Internationale Anmeldenummer: PCT/EP2009/061078
(87) Internationale Veröffentlichungsnummer: WO 2010/023245

(56) Entgegenhaltungen:
- DE-U1- 29 924 838
- DE-U1-202006 017 362
- DE-U1-202008 003 168
- US-B1- 6 581 484

## Beschreibung

Die Erfindung betrifft eine Sensoranordnung für ein Kraftfahrzeug, mit einem an einer Fahrzeugscheibe befestigbaren Halterahmen, mit einem an den Halterahmen anfügbaren Sensorgehäuse, wobei an dem Sensorgehäuse wenigstens ein federnder Hebel verschwenkbar gelagert ist, und wobei nach dem Verschwenken des Hebels ein Hebelabschnitt Hinterschneidungen am Halterahmen hintergreift, wodurch der Hebel das Sensorgehäuse federnd an die Fahrzeugscheibe anpresst.

Aus der Patentschrift EP 1 202 885 B1 ist eine derartige Sensoranordnung bekannt. Der beschriebene Sensor besitzt zwei hebelartige Befestigungsteile, die durch jeweils ein Blechstanzteil gebildet sind, welches einen federnden Bereich aufweist und mit einem Endabschnitt an jeweils eine taschenförmige Ausformung eines Gehäuseteils des Sensors angefügt ist. Die Befestigungsteile sind um ihre Verbindungsstellen am Gehäuseteil verschwenkbar angeordnet. Die freien Endabschnitte der Befestigungsteile können gegen die Federspannung ihrer federnden Bereiche über Zapfen gedrückt werden, die an einer einen Halterahmen bildenden Befestigungsvorrichtung angeformt sind. Hierdurch wird das Gehäuseteil des Sensors unter Federspannung gegen die Fahrzeugscheibe gepresst.
Die hebelartigen Befestigungsteile bilden durch die Anlenkung eines Endabschnitts am Gehäuseteil jeweils einen einarmigen Hebel aus. Da das Anfügen der Befestigungsteile an die Befestigungsvorrichtung durch eine Kraftbeaufschlagung eines Abschnitts dieses einarmigen,Hebels erfolgt, ist die dazu aufzubringende Montagekraft relativ groß.

Nachteilig ist auch, dass die Montagekräfte direkt auf die relativ kompliziert geformten Befestigungsteile einwirken müssen, die relativ schlecht zu handhaben sind. Außerdem ist es nachteilig, dass bei der bekannten Anordnung mindestens zwei separat zum montierende Befestigungsteile benötigt werden, um eine gleichmäßige Anpressung des Sensors an die Fahrzeugscheibe zu erreichen.

Nachteilig ist auch, dass Bügelfedern, wie sie beim Gegenstand der EP 1 202 885 B1 als Befestigungsteile verwendet werden eine relativ steile Federkennlinie aufweisen. Hierdurch haben Bauteiletoleranzen, die sich auf die Abstände zwischen den Sensorgehäuseteilen und den Halterahmen auswirken, einen erheblichen Einfluss auf die Federkraft, so dass die Anpresskraft des Sensors an die Fahrzeugscheibe nur schwer zu "dosieren" ist.

Es stellte sich die Aufgabe, eine einfache und kostengünstige Sensoranordnung zu schaffen, die mit geringem Kraftaufwand an die Fahrzeugscheibe montierbar ist und deren Bestandteile bei der Montage gut handhabbar sind und dabei die vorgenannten Nachteile vermeidet.

Diese Aufgabe wird erfindungsgemäß dadurch gelöst, dass der Hebel einen zweiarmigen Hebel ausbildet.

Der Begriff "zweiarmig" ist hier insbesondere im physikalischen Sinne verwendet und kennzeichnet somit einen Hebel, dessen Drehpunkt zwischen einem Kraftarm und einem Lastarm gelegen ist. Durch die Verwendung eines zweiarmigen Hebels zur Verbindung von Sensorgehäuse und Halterahmen wird durch einen verlängerten Betätigungsweg eine Kraftübersetzung erreicht. Hierdurch ist die erforderliche Montagekraft, trotz einer erreichbaren hohen Anpresskraft des Sensors an die Fahrzeugscheibe, vergleichsweise gering.

Durch eine geeignete Formgebung des zur Betätigung vorgesehenen zweiten Hebelarms kann zudem die Handhabbarkeit des Hebel verbessert werden, wodurch der Montagevorgang komfortabler wird. Diesbezüglich ist es beispielsweise vorteilhaft, wenn an den nicht am Halterahmen angreifenden Hebelarm des Hebels eine Betätigungsfläche angeformt ist. Durch die Betätigungsfläche kann der Hebel bei der Montage durch Druck mit einer ganzen Handfläche betätigt werden, wodurch die Montage vereinfacht wird.

Vorteilhaft ist es zudem, wenn der Hebel einstückig zwei parallel zueinander angeordnete Hebelflächen ausbildet, die durch die Betätigungsfläche miteinander verbunden sind.

Besonders vorteilhaft ist es, wenn mit dem Sensorgehäuse ein federnder Spannbügel verbunden ist und der Hebel an diesem Spannbügel gelagert ist. Hierdurch kann die Federwirkung im wesentlichen durch die Lagerung des Hebels an dem federnden Spannbügel entstehen, so dass der Hebel selbst als ein im wesentlichen starres und damit besonders stabiles Bauteil ausgebildet sein kann.

Ebenfalls besonders vorteilhaft ist es, wenn der Spannbügel verschiedene Gehäuseteilen eines mehrteilig ausgebildeten Sensorgehäuses miteinander verbindet, und zwar insbesondere dadurch, dass der Spannbügel mit wenigstens einem Gehäuseteil des Sensorgehäuses verrastet ist. Eine derartige Anordnung ist in der nicht vorveröffentlichten deutschen Patentanmeldung DE 10 2008 028 978 im Detail beschrieben. Vorteilhaft ist auch, wenn der Hebel an einer am Spannbügel angeformten Schneidenlagerung gelagert ist. Eine derartige Schneidenlagerung funktioniert reibungsarm durch Kippen eines Blechstreifens in der Spitze einer etwa dreieck- oder kreissektorförmigen Ausnehmung.

Vorteilhaft ist zudem, wenn der Hebel bzw. die Hebelflächen jeweils wenigstens eine angeformte Rastöse aufweisen, die in der Montageendstellung mit einem am Halterahmen angeformten Zapfen verrasten.

Weitere vorteilhafte Ausgestaltungen und Weiterbildungen der Erfindung gehen aus den abhängigen Ansprüchen und der nachfolgenden Beschreibung eines Ausführungsbeispiels anhand der Zeichnung hervor. Es zeigen
- Figur 1: das Sensorgehäuse vor dem Anfügen an den Halterahmen,
- Figur 2: den Hebel in einer Einzelteildarstellung,
- Figur 3: einen Abschnitt des Hebels vor dem Anfügen an den Spannbügel,
- Figur 4: die Sensoranordnung vor dem Verriegeln,
- Figur 5: eine Detailansicht der Figur 4,
- Figur 6: die Sensoranordnung nach dem Verriegeln,
- Figur 7: eine Detailansicht der Figur 6.

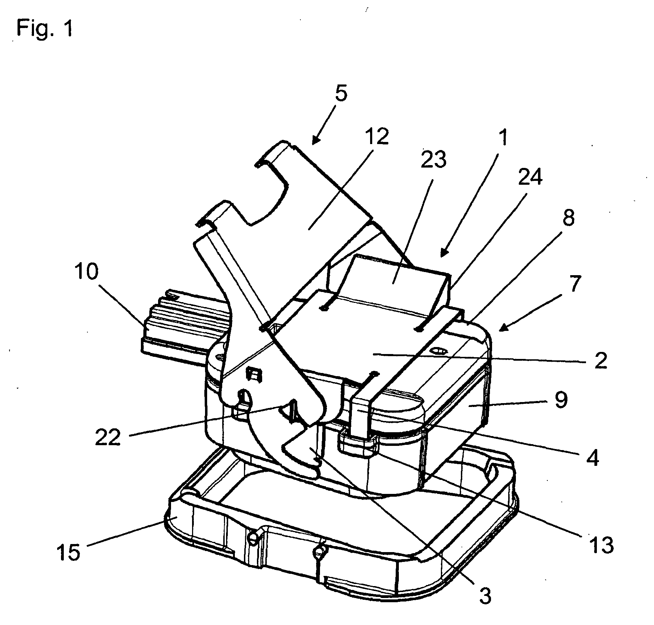

Die Figur 1 zeigt eine Sensoranordnung für ein Kraftfahrzeug. Die Sensoranordnung besteht aus einem Sensorgehäuse 7, welches an einem Halterahmen 15 befestigbar ist. Im endmontierten Zustand der Sensoranordnung ist der Halterahmen 15 mit einer hier nicht dargestellten Fahrzeugscheibe verbunden.

Das Sensorgehäuse 7 ist zweiteilig ausgeführt und besteht aus einem Sensorgehäusekörper 9, der von einem Sensorgehäusedeckel 8 abgeschlossen ist. Am Sensorgehäusedeckel 8 ist ein Anschlussstück 10 angeformt, welches elektrische Steckkontakte aufweist, über die elektronische Sensorkomponenten im Inneren des Sensorgehäuses 7 elektrisch kontaktiert werden können.

Innerhalb des Sensorgehäuses 7 sind hier nicht näher beschriebene elektronische und optische Komponenten angeordnet, wie beispielsweise ein Lichtleitkörper der elektromagnetische Strahlung über einen optischen Koppelkörper in die Fahrzeugscheibe ein- bzw. auskoppelt, sowie ein Schaltungsträger, der elektronische Sensorkomponenten trägt und elektrisch miteinander verbindet.

Ein Spannbügel 1, der mittels mehrerer Federarme 4 den Sensorgehäusedeckel 8 mit dem Sensorgehäusekörper 9 mechanisch verbindet, ist aus einem Blechstreifen geformt und bildet in einem mittleren Bereich eine im wesentlichen ebene Grundfläche 2 aus. An die Schmalseiten der Grundfläche 2 ist jeweils ein Bügel 3 einstückig angeformt, von dem ein erster Abschnitt 23 von der Grundfläche 2 schräg nach oben und ein, auf den ersten Abschnitt 23 folgender zweiter Abschnitt 24 in Gegenrichtung nach unten abgewinkelt ist, so dass sich der zweite Abschnitt 24 etwa senkrecht zur Grundfläche 2 des Spannbügels 1 erstreckt.

Die Federarme 4 des Spannbügels 1 reichen bis zum Sensorgehäusekörper 9, wobei an den Federarmen 4 einstückig angeformte, in der Zeichnung nicht als Einzelteil dargestellte, Federhaken in Rastaufnahmen 13 am Sensorgehäusekörper 9 eingreifen. Die Rastaufnahmen 13 sind einstückig am Sensorgehäusekörper 9 angeformt, wobei die Aufnahmeöffnungen der Rastaufnahmen 13 parallel zur Hauptfläche des Sensorgehäusekörpers 9 ausgerichtet sind.
Die an den Federarmen 4 angeformten Federhaken stellen dabei eine feste, jedenfalls nur durch eine vorsätzliche Manipulation wieder lösbare Verbindung, zwischen dem Spannbügel 1 und dem Sensorgehäusekörper 9 her. Der zwischen dem Spannbügel 1 und dem Sensorgehäusekörper 9 angeordnete Sensorgehäusedeckel 8 wird so durch die Grundfläche 2 des Spannbügels 1 gegen den Sensorgehäusekörper 9 gepresst, so dass durch den Spannbügel 1 die beiden Teile des Sensorgehäuses 7 miteinander verbunden sind und der Spannbügel 1 zugleich auf dem Sensorgehäuse 7 befestigt ist.

An dem Spannbügel 1 ist ein Hebel 5 mittels einer Schneidenlagerung 22 beweglich gelagert.

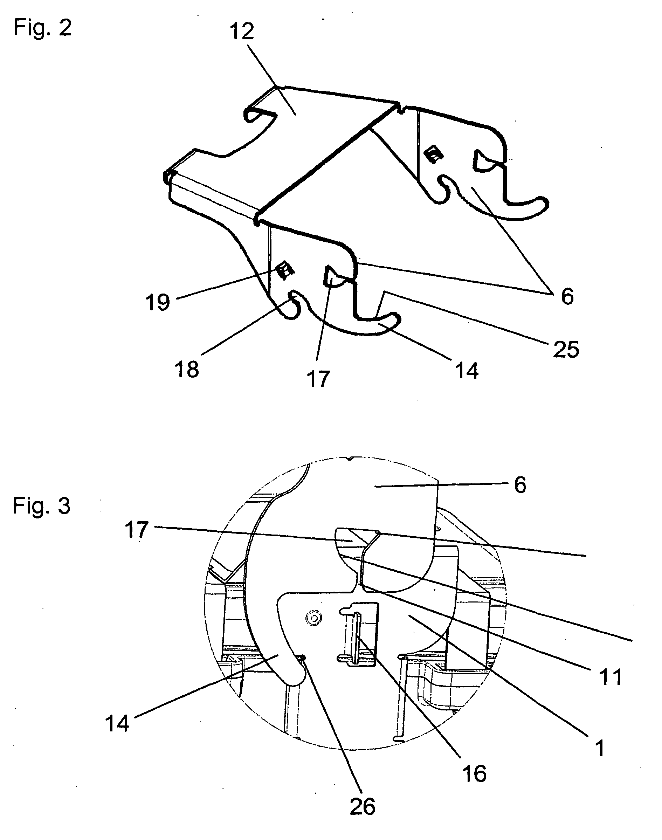

Die Figur 2 zeigt diesen Hebel 5 als Einzelteil. Das einstückig geformte Blechstanzteil bildet zwei zueinander parallel angeordnete Hebelflächen 6 aus, die über eine dazu senkrecht angeordnete Betätigungsfläche 12 miteinander verbunden sind Die Hebelflächen 6 weisen jeweils eine nach innen ausgestellte Rastzunge 19, eine Rastöse 18, eine Ausnehmung 17, sowie als Endabschnitt eine bogenförmige Anformung 14 auf, deren Innenseite eine Rastkurve 25 ausbildet.

In der Figur 3 ist eine Hebelfläche 6 vor dem Anfügen an den Spannbügel 1 dargestellt. Die Ausnehmung 17 in der Hebelfläche 6 ist etwa kreissegmentförmig ausgebildet und weist einen bis zum Rand der Hebelfläche 6 geführten Einschnitt 11 auf. In den Einschnitt 11 ist ein am Spannbügel 1 angeformter abgewinkelter Blechstreifen einschiebbar, der, zusammenwirkend mit den Randflächen der Ausnehmung 17, eine Schneide 16 für eine Schneidenlagerung des Hebels 5 ausbildet.

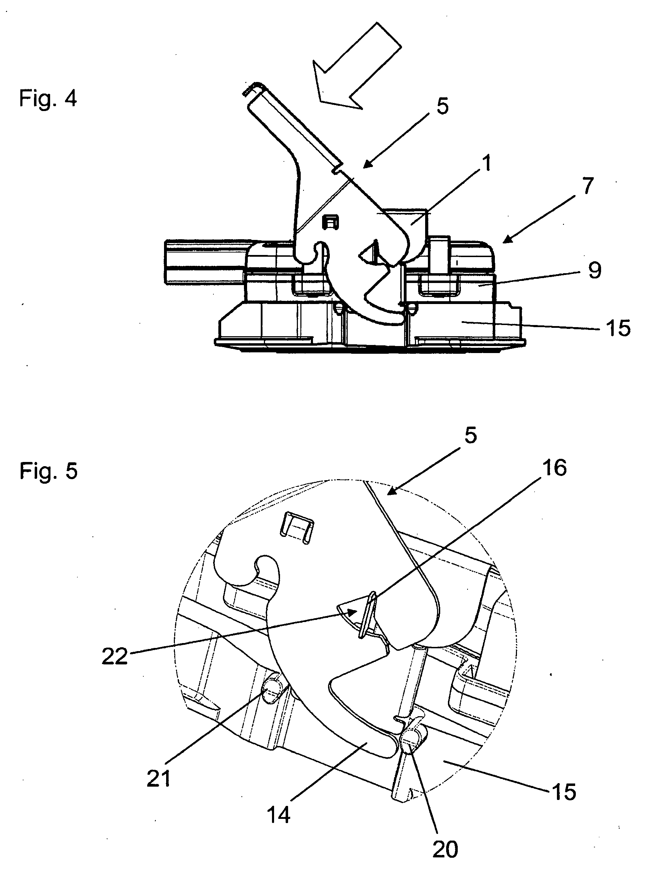

Diese Schneidenlagerung 22 ist besonders deutlich in der Figur 5 erkennbar. Durch die Lagerung am Spannbügel 1 bildet der Hebel 5 einen zweiarmigen Hebel aus, wobei der am Halterahmen 15 angreifende Abschnitt des Hebels 5 einen deutlich kürzenden Hebelarm bildet als der Abschnitt des Hebels 5 zu dem die Betätigungsfläche 12 gehört.

In der Figur 4 ist der Hebel 5 vor dem Verrasten mit dem Halterahmen 15 dargestellt. Der Hebel 5 ist mit dem Spannbügel 1 vormontiert, der bereits mit dem Sensorgehäuse 7 verbunden ist. Diese Anordnung ist zudem in den Halterahmen 15 eingesetzt, so dass der Halterahmen 15 den Sensorgehäusekörper 9 umlaufend umfasst.

Das am längere Hebelarm mit der Betätigungsfläche 12 aufgrund seines Eigengewichts angreifende Drehmoment schwenkt der Hebel 5 selbsttätig in die dargestellte Montagestellung.

Das Sensorgehäuse 7 wird in den Halterahmen 15 eingeführt und der Hebel 5 in Pfeilrichtung nach unten geschwenkt. Die bogenförmige Anformung 14 des Hebels 5 greift unter einen ersten Zapfen 20 des Halterahmens 15 und mit der Schwenkbewegung des Hebels 5 wird der Zapfen 20 entlang der Rastkurve 25 an der Anformung 14 des Hebels 5 geführt. Am Ende der Schwenkbewegung rastet die Rastöse 18 des Hebels 5 an einem zweiten Zapfen 21 ein. Mit dem Einrasten ist die Montage der Sensoranordnung abgeschlossen. Der Hebel 5 hat durch die Übersetzung der Anpresskraft die Montagekräfte reduziert.

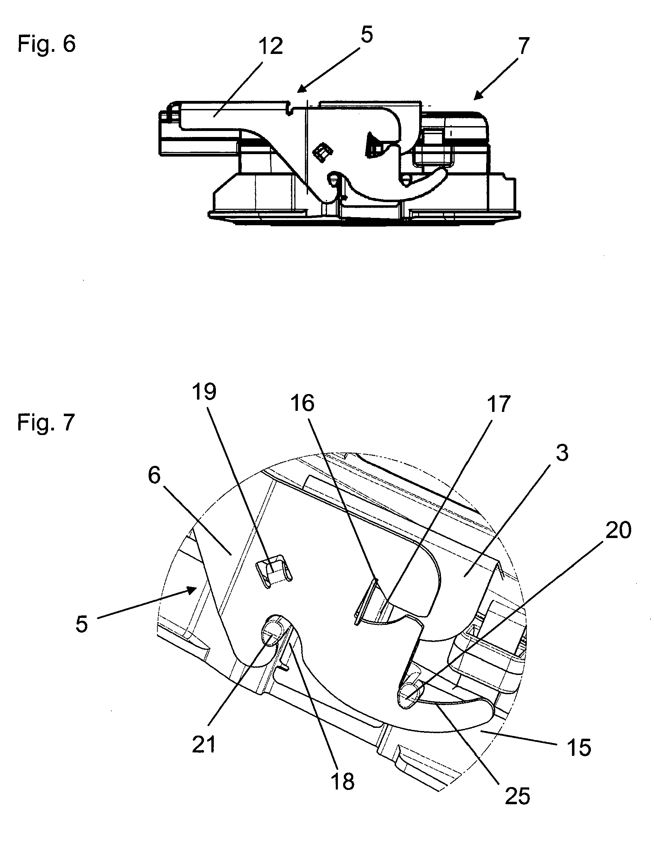

Die damit erreichte Endstellung des Hebels 5 zeigt die Figur 6. Die Betätigungsfläche 12 des Hebels 5 liegt nun an der Oberseite des Sensorgehäuses 7. Ebenso liegt der Spannbügel 1 dicht am Sensorgehäuse 7 an, so dass die gesamte Sensoranordnung nun eine relativ geringe Bauhöhe aufweist. Wie besonders die Detailansicht der Figur 7 verdeutlicht, hintergreifen die Rastkurve 25 und die Rastöse 18 formschlüssig die beiden Zapfen (20, 21). Die nach oben gerichtete Federkraft des Bügels 3 drückt die Schneide 16 der Schneidenlagerung gegen den spitzwinkligen Teil der Ausnehmung 17 in der Hebelfläche 6. Da der Hebel 5 aber in senkrechter Richtung unverschieblich am Halterahmen 15 fixiert ist, presst die Federkraft des Bügels 3 das Sensorgehäuse 7 gegen die nicht dargestellte Fahrzeugscheibe.

Die Stellung des Hebels 5 in seiner Endposition wird durch die an die Hebelfläche 6 angeformten Rastzunge 19 gesichert, die mit dem in der Figur 3 erkennbaren, am Spannbügel 1 angeformten Vorsprung 26 verrastet.

### Bezugszeichen

- 1: Spannbügel
- 2: Grundfläche
- 3: Bügel
- 4: Federarme
- 5: Hebel
- 6: Hebelflächen
- 7: Sensorgehäuse
- 8: Sensorgehäusedeckel
- 9: Sensorgehäusekörper
- (8, 9): Sensorgehäuseteile
- 10: Anschlussstück
- 11: Einschnitt
- 12: Betätigungsfläche
- 13: Rastaufnahmen
- 14: bogenförmige Anformung
- 15: Halterahmen
- 16: Schneide
- 17: Ausnehmung
- 18: Rastöse
- 19: Rastzunge
- 20: erster Zapfen
- 21: zweiter Zapfen
- 22: Schneidenlagerung
- 23: erster Abschnitt (des Bügels 3)
- 24: zweiter Abschnitt (des Bügels 3)
- 25: Rastkurve
- 26: Vorsprung

## Patentansprüche

1. Sensoranordnung für ein Kraftfahrzeug, mit einem an einer Fahrzeugscheibe befestigbaren Halterahmen (15), mit einem an den Halterahmen (15) anfügbaren Sensorgehäuse (7), wobei an dem Sensorgehäuse (7) ein federnder Hebel (5) verschwenkbar gelagert ist, und wobei nach dem Verschwenken des Hebels (5) ein Hebelabschnitt Hinterschneidungen am Halterahmen (15) hintergreift, wodurch der Hebel (5) das Sensorgehäuse (7) federnd an die Fahrzeugscheibe anpresst,
**dadurch gekennzeichnet,**
**dass** der Hebel (5) einen zweiarmigen Hebel ausbildet, dessen Drehpunkt zwischen einem Kraftarm und einem Lastarm gelegen ist.

2. Sensoranordnung nach Anspruch 1, **dadurch gekennzeichnet, dass** an den nicht am Halterahmen (15) angreifenden Hebelarm eine Betätigungsfläche (12) angeformt ist.

3. Sensoranordnung nach Anspruch 2, **dadurch gekennzeichnet, dass** der Hebel (5) zwei parallele an zwei Seitenflächen des Sensorgehäuses (7) gelagerte Hebelflächen (6) gebildet ist, und die Hebelflächen (6) durch die Betätigungsfläche (12) miteinander verbunden sind.

4. Sensoranordnung nach Anspruch 1, **dadurch gekennzeichnet**, die Hinterschneidungen als an den Halterahmen (15) angeformte Zapfen (20, 21) ausgebildet sind.

5. Sensoranordnung nach Anspruch 1, **dadurch gekennzeichnet, dass** mit dem Sensorgehäuse (7) ein federnder Spannbügel (1) verbunden ist.

6. Sensoranordnung nach Anspruch 5, **dadurch gekennzeichnet, dass** das Sensorgehäuse (7) aus mehreren Gehäuseteilen (8, 9) besteht und der federnde Spannbügel (1) mit wenigstens einem Gehäuseteil (9) verrastet ist.

7. Sensoranordnung nach Anspruch 5, **dadurch gekennzeichnet, dass** der Hebel (5) am Spannbügel (1) gelagert ist.

8. Sensoranordnung nach Anspruch 7, **dadurch gekennzeichnet, dass** der Hebel (5) an einer am Spannbügel (1) angeformten Schneidenlagerung (22) gelagert ist.

9. Sensoranordnung nach Anspruch 1 oder 3, **dadurch gekennzeichnet, dass** der Hebel (5) bzw. die Hebelflächen (6) jeweils eine angeformte Rastöse (18) aufweisen, die in der Montageendstellung mit einem am Halterahmen (15) angeformten Zapfen (21) verrastet.

## Claims

1. Sensor arrangement for a motor vehicle having a supporting frame (15) which can be affixed to a vehicle windscreen, having a sensor housing (7) which can be appended to the supporting frame (15), whereby a resilient lever (5) is supported on the sensor housing (7) in a manner capable of swivelling and whereby, once the lever (5) has been swivelled, one section of the lever engages behind indentations on the supporting frame (15) as a result of which the lever (5) presses the sensor housing (7) against the vehicle windscreen in a resilient fashion,
**characterised in that**
the lever (5) forms a double-armed lever, the fulcrum of which is located between one force arm and one load arm.

2. Sensor arrangement according to Claim 1, **characterised in that** an actuating surface (12) is formed onto the lever arm which is not engaged in the supporting frame (15).

3. Sensor arrangement according to Claim 2, **characterised in that** the lever (5) is formed by two parallel lever surfaces (6) supported on two side surfaces of the sensor housing (7) and the lever surfaces (6) are connected to each other by the actuating surface (12).

4. Sensor arrangement according to Claim 1, **characterised in that** the indentations are designed as pins (20, 21) moulded onto the supporting frame (15).

5. Sensor arrangement according to Claim 1, **characterised in that** a resilient clamp clip (1) is connected to the sensor housing (7).

6. Sensor arrangement according to Claim 5, **characterised in that** the sensor housing (7) is made up of several housing components (8, 9) and the resilient clamp clip (1) is interlocked with at least one housing component (9).

7. Sensor arrangement according to Claim 5, **characterised in that** the lever (5) is supported on the clamp clip (1).

8. Sensor arrangement according to Claim 7, **characterised in that** the lever (5) is supported on a knife-edge bearing (22) formed onto the clamp clip (1).

9. Sensor arrangement according to Claim 1 or Claim 3, **characterised in that** the lever (5) resp. the lever surfaces (6) each have an integrated snap-on eye (18) which interlocks with a pin (21) moulded onto the supporting frame (15) in the final assembled position.

## Revendications

1. Ensemble de détection pour un véhicule automobile, avec un cadre de maintien (15), qui peut être fixé sur une glace de véhicule automobile, avec un boîtier de détecteur (7), qui peut être assemblé au cadre de maintien (15), un levier élastique (5) étant monté à pivotement sur le boîtier de détecteur (7) et, après le pivotement du levier (5), une partie du levier s'engageant derrière des contre-dépouilles, qui sont formées sur le cadre de maintien (15), ce qui fait que le levier (5) presse élastiquement le boîtier de détecteur (7) contre la glace du véhicule automobile,
**caractérisé en ce que**
le levier (5) est réalisé sous la forme d'un levier à deux bras, dont le point de rotation est situé entre un bras de puissance et un bras de charge.

2. Ensemble de détection selon la revendication 1, **caractérisé en ce qu'**une surface d'actionnement (12) est formée sur le bras de levier, qui n'attaque pas le cadre de maintien (15).

3. Ensemble de détection selon la revendication 2, **caractérisé en ce que** le levier (5) est formé par deux surfaces de levier (6) parallèles, montées sur deux surfaces latérales du boîtier de détecteur (7) et que les deux surfaces de levier (6) sont reliées ensemble par la surface d'actionnement (12).

4. Ensemble de détection selon la revendication 1, **caractérisé en ce que** les contre-dépouilles sont réalisées en tant que tenons (20, 21) formés sur le cadre de maintien (15).

5. Ensemble de détection selon la revendication 1, **caractérisé en ce qu'**un arceau de serrage élastique (1) est relié au boîtier de détecteur (7).

6. Ensemble de détection selon la revendication 5, **caractérisé en ce que** le boîtier de détecteur (7) consiste en plusieurs parties de boîtier (8, 9) et que l'arceau de serrage élastique (1) s'encliquète avec au moins une partie de boîtier (9).

7. Ensemble de détection selon la revendication 5, **caractérisé en ce que** le levier (5) est monté sur l'arceau de serrage (1).

8. Ensemble de détection selon la revendication 7, **caractérisé en ce que** le levier (5) est monté sur une articulation à couteau (22), qui est formée sur l'arceau de serrage (1).

9. Ensemble de détection selon revendication 1 ou 3, **caractérisé en ce que** le levier (5), respectivement les surfaces de levier (6) sont pourvus chacun d'une mortaise (18), qui, lorsque le montage est terminé, s'encliquète avec un tenon (21), qui est formé sur le cadre de maintien (15).
